# EUROPEAN PATENT APPLICATION

(11) **EP 2 651 109 A1**
(43) Date of publication of application: **16.10.2013**
(21) Application number: 12164191.4
(22) Date of filing: 13.04.2012
(51) Int. Cl.: H04N 1/00

(54) **Data capture system**

(71) Applicant: Integrity Digital Solutions, LLC., Temple, TX 76502 (US)
(72) Inventor: Elliott, Jeremiah, Temple, TX Texas 76502 (US); Joyner, Stephen, Temple, TX Texas 76502 (US)
(74) Representative: KATZAROV S.A.

(57) **Abstract**

The present invention provides a method and system for converting print data into both discrete data and images. The invention includes pseudo printer implemented as a simulated SMB/CIFS printer on a local area network. The pseudo printer captures raw print data from a network device sending a print request for a document. The data is captured as a Device Independent Print Definition file. A data map that identifies pixel coordinates for image regions and discrete data regions within the document is retrieved according to the MAC address of the device sending the print request. Images and discrete data are then cut out of the document and uploaded to a remote server.

## Description

### Technical Field

The present invention relates generally to data capture and more specifically to a method and system for converting print data into both discrete data and images.

### Background of the Invention

Many current computer applications are designed to print output to a printer only. These applications may be embedded or non-embedded applications used to operate special purpose hardware. In the specific case of medical diagnostic testing equipment, which often captures both discrete as well as image data, there is no efficient way to move the data into a third party system.

With the current state of the art, the only way to digitally capture both the image elements and discrete data is to scan the document in question and store the entire scan as an image and then manually key the discrete data elements into the third party system. Such an approach is both time and labor intensive, adding substantial costs to medical administrative functions.

Therefore, it would be desirable to have a method and system for automatically capturing printed data and images and saving them digitally.

### Summary of the Invention

The present invention provides a method and system for converting print data into both discrete data and images. The invention includes pseudo printer implemented as a simulated SMB/CIFS printer on a local area network. The pseudo printer captures raw print data from a network device sending a print request for a document. The data is captured as a Device Independent Print Definition (e.g., PostScript) file. A data map that identifies pixel coordinates for image regions and discrete data regions within the document is retrieved according to the MAC address of the device sending the print request. Images and discrete data are then cut out of the document and uploaded to a remote server.

The present invention provides in particular a method for converting print data into both discrete data and images, the method comprising: (a) providing a simulated printer on a local area network (LAN); (b) capturing raw print data for a document sent by a network device to the simulated printer; (c) retrieving a data map associated with the document, wherein the data map identifies pixel coordinates for image regions and discrete data regions within the document; (d) cutting out images from the document and uploading the images to a remote server; and (e) cutting out discrete data from the document and uploading the discrete data to the remote server.

In embodiments, the method further comprises uploading the images from the document to a LAN cache subsystem for retrieval by clients on the LAN at maximum available LAN bandwidth.

In embodiments, the method further comprises processing the discrete data via optical character recognition.

The simulated printer is for example a simulated Server Message Block/Common Internet File System (SMB/CIFS) network printer.

In embodiments, the simulated printer captures the raw print data as a Device Independent Print Definition file and assigns a Universally Unique Identifier (UUID) to the file. The Device Independent Print Definition file is for example a PostScript file.

In embodiments, the data map of the document is retrieved according to the media access control (MAC) address of the network device.

The present invention also provides in particular a data capture system, comprising: (a) a simulated network printer that captures raw print data for a document sent by a network device; and (b) a processing means for: (1) retrieving a data map associated with the document, wherein the data map identifies pixel coordinates for image regions and discrete data regions within the document; (2) cutting out images from the document and uploads the images to a remote server; and (3) cutting out discrete data from the document and uploads the discrete data to said remote server.

In embodiments, the processor uploads the images from the document to a LAN cache subsystem for retrieval by clients on the LAN at maximum available LAN bandwidth.

In embodiments, the processor processes the discrete data via optical character recognition.

The simulated printer is for example a simulated Server Message Block/Common Internet File System (SMB/CIFS) network printer.

In embodiments, the simulated network printer captures the raw print data as a Device Independent Print Definition file and assigns a Universally Unique Identifier (UUID) to the file. The Device Independent Print Definition file is for example a PostScript file.

In embodiments, the data map of the document is retrieved according to the media access control (MAC) address of the network device.

The data capture system is for example an embedded device

### Brief Description of the Drawings

The invention, as well as a preferred mode of use, further objects and advantages thereof, will best be understood by reference to the following detailed description of an illustrative embodiment when read in conjunction with the accompanying drawings, wherein:
Figure 1 is a block diagram illustrating a data capture system in accordance with the present invention;
Figure 2 is a block diagram illustrating the operation of the data processor in accordance with the present invention;
Figure 3 is a block diagram that shows the basic structure of a caching subsystem for the LAN in accordance with the present invention; and
Figure 4 is a flowchart illustrating the steps of the data capture process in accordance with the present invention.

### Detailed Description of the Drawings

The Data Capture System provided by the present invention converts data that was originally intended only to be printed into both discrete data and images. Typically this print data is produced by applications that run specialized hardware. One example is medical diagnostic equipment. By capturing both the discrete data and images in the print data, the present invention obviates the cumbersome procedure of having to transfer such print data to third party systems by first scanning and storing printouts as digital images and then manually entering the discrete data elements into the third party system.

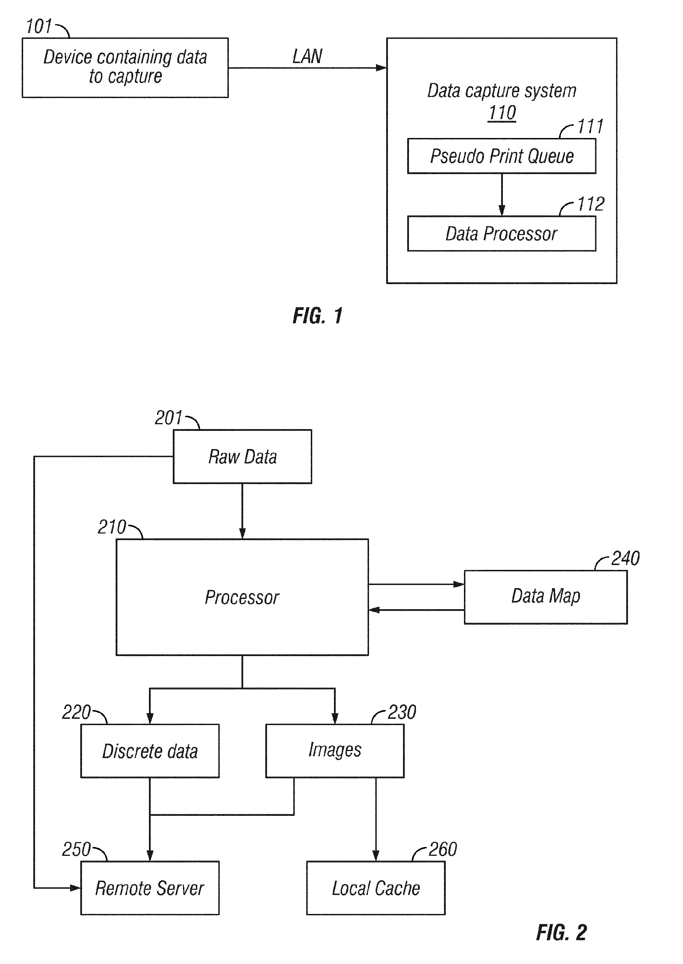

Figure 1 is a block diagram illustrating a data capture system in accordance with the present invention. The data capture system comprises two primary components: a raw data capture system and a data processor. A device 101 containing the data to be captured is connected via a local area network (LAN) to a network-connected data capture system 110. In addition to general use desktop computers the device 101 might also be, for example, a medical diagnostic device or similarly specialized hardware. In one embodiment, the data capture system 110 may be run on an appliance as an embedded device.

The data capture system of the present invention may be configured on a local area network similar to adding a physical printer. An "add printer" wizard is launched from the device 101 containing the data or a network client that controls the device 101 in question. Using the wizard, the user browses the local network to locate the shared printer and confirms the installation of the "printer." Therefore, instead of sending print data to an actual physical printer, the device 101 sends the print data to the data capture system 110. (It should be noted that the device 101 can of course also send print data to a physical printer on the LAN if so desired.)

Within the data capture system 110 is a pseudo network printer 111. This pseudo printer 111 might be, e.g., a simulated Server Message Block/Common Internet File System (SMB/CIFS) network printer that allows the system to capture data from any device that can print via Ethernet. The pseudo print queue 111 captures the data from the external device 101 as a Device Independent Print Definition (e.g., PostScript) file and notes the hardware media access control (MAC) address from which the data came. Files in the queue 111 are then picked up the data processing daemon 112.

Figure 2 is a block diagram illustrating the operation of the data processor in accordance with the present invention. The raw data 201 is passed to the processor 210 from the pseudo print queue 111 shown in Figure 1. The data processor 210 identifies the device from which the data came according to the MAC address tracked by the data capture system. This information is used to acquire the correct map file 240.

Once the data map file 240 has been loaded, the processor 210 knows via pixel coordinates where the image regions and data regions are located in the document. The processor 210 then cuts out the data regions and image regions. The data regions are converted to discrete data via optical character recognition (OCR).

Once the processor 210 is done processing the raw data file, it persists the images 230 and discrete data 220 and the original document 250 to a remote server 260. The processor 210 also persists the images 230 into a LAN caching subsystem 270 for quicker retrieval by clients on the LAN.

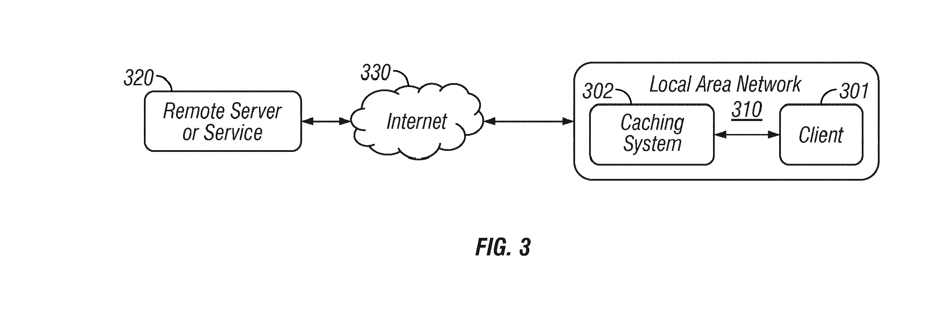

Figure 3 is a block diagram that shows the basic structure of a caching subsystem for the LAN in accordance with the present invention. The caching mechanism is a computer device 302 containing storage capacity, which resides on a local area network (LAN) 310. It facilitates fast downloads and uploads of any file that the client 301 may require by taking advantage of the full bandwidth over the LAN, which is typically higher than Internet bandwidths.

When the client 301 needs a file, the client application requests the file from the cache 302. In the case of a cache hit, the data is returned to the client directly over a communications link in the LAN infrastructure at maximum available bandwidth. When the client 301 needs to save or upload a new file, the file is actually sent to the local cache 302 over a LAN communications link at the maximum available bandwidth, which allows for uploads of large files that seem faster from the client's perspective. Once the cache 302 has received the file it will in turn upload the file to a remote server 320 via the Internet 330 at available bandwidth for permanent storage. If there is a cache miss or the cache 302 is simply unavailable, the client system uploads or downloads directly from the remote server 320 via the Internet.

By persisting images extracted from print data to the LAN cache 302, the data capture system allows other clients on the LAN to access and download these images at maximum LAN bandwidth rather than downloading them from a remote server at narrower Internet bandwidths.

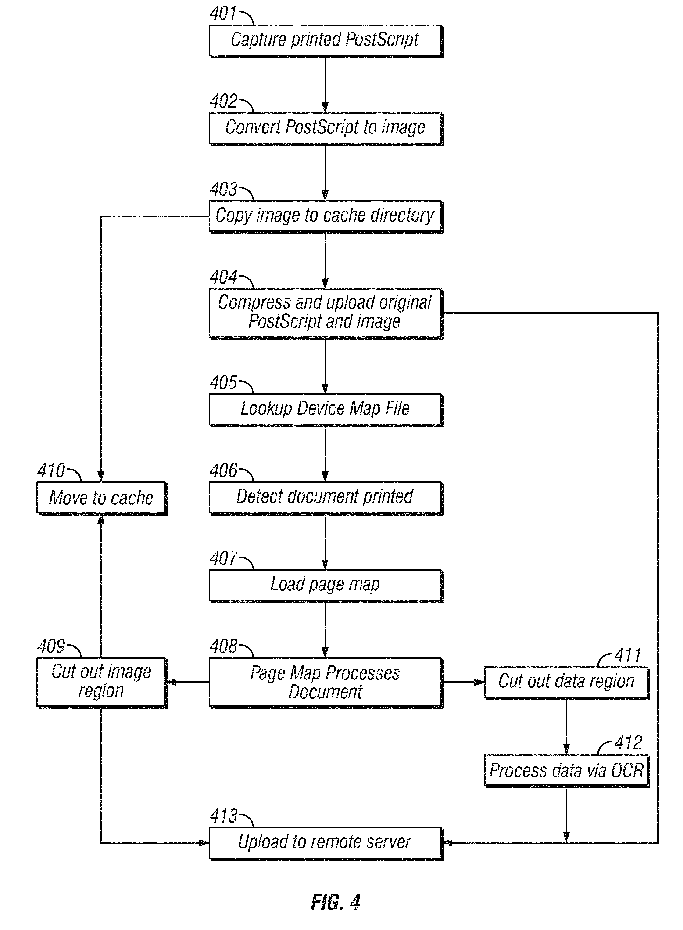

Figure 4 is a flowchart illustrating the steps of the data capture process in accordance with the present invention. The data capture system initially captures the data printed from the external device as a Device Independent Print Definition file such as PostScript and assigns a Universally Unique Identifier (UUID) to the file (step 401). It then converts the Device Independent Print Definition file to an image and assigns a UUID to the image file (step 402). The system then copies the image to a cache directory (step 403). The original Device Independent Print Definition file and image file are then uploaded to a remote server (step 404).

Based on the MAC address of the sending device, the system looks up the device map file (step 405). The device map file detects which document was printed and may also cross reference the document in question with a particular customer (step 406).

Based on which document was printed, the system loads the appropriate page map (step 407). The page map knows via pixel location which regions of the print should be stored as discreet data and which regions should be cut out into individual images (step 408).

Image regions are cut out and assigned a UUID (step 409) and moved into the cache for immediate access over the LAN (step 410). The images are also compressed and uploaded to a remote server (step 413).

The discrete data regions are also cut out (step 411) and processed via OCR (step 412). They are then uploaded to the remote server as well (step 413).

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated. It will be understood by one of ordinary skill in the art that numerous variations will be possible to the disclosed embodiments without going outside the scope of the invention as disclosed in the claims.

## Claims

1. Method for converting print data into both discrete data and images, the method comprising:
(a) providing a simulated printer on a local area network (LAN);
(b) capturing raw print data for a document sent by a network device to said simulated printer;
(c) retrieving a data map associated with said document, wherein the data map identifies pixel coordinates for image regions and discrete data regions within the document;
(d) cutting out images from the document and uploading the images to a remote server; and
(e) cutting out discrete data from the document and uploading the discrete data to said remote server.

2. Method according to claim 1, further comprising uploading the images from said document to a LAN cache subsystem for retrieval by clients on the LAN at maximum available LAN bandwidth.

3. Method according to claim 1 or 2, further comprising processing the discrete data via optical character recognition.

4. Method according to one of claims 1 to 3, wherein the simulated printer is a simulated Server Message Block/Common Internet File System (SMB/CIFS) network printer.

5. Method according to one of claims 1 to 4, wherein the simulated printer captures the raw print data as a Device Independent Print Definition file and assigns a Universally Unique Identifier (UUID) to the file.

6. Method according to claim 5, wherein the Device Independent Print Definition file is a PostScript file.

7. Method according to one of claims 1 to 6, wherein the data map of the document is retrieved according to the media access control (MAC) address of said network device.

8. Data capture system, comprising:
(a) a simulated network printer that captures raw print data for a document sent by a network device; and
(b) a processing means for:
(1) retrieving a data map associated with said document, wherein the data map identifies pixel coordinates for image regions and discrete data regions within the document;
(2) cutting out images from the document and uploads the images to a remote server; and
(3) cutting out discrete data from the document and uploads the discrete data to said remote server.

9. Data capture system according to claim 8, wherein the processor uploads the images from said document to a LAN cache subsystem for retrieval by clients on the LAN at maximum available LAN bandwidth.

10. Data capture system according to claim 8 or 9, wherein the processor processes the discrete data via optical character recognition.

11. Data capture system according to one of claims 8 to 10, wherein the simulated printer is a simulated Server Message Block/Common Internet File System (SMB/CIFS) network printer.

12. Data capture system according to one of claims 8 to 11, wherein the simulated network printer captures the raw print data as a Device Independent Print Definition file and assigns a Universally Unique Identifier (UUID) to the file.

13. Data capture system according to claim 12, wherein the Device Independent Print Definition file is a PostScript file.

14. Data capture system according to one of claims 8 to 13, wherein the data map of the document is retrieved according to the media access control (MAC) address of said network device.

15. Data capture system according to one of claims 8 to 14, wherein the data capture system is an embedded device.
